# EUROPÄISCHE PATENTSCHRIFT

(11) **EP 1 408 733 B1**
(45) Veröffentlichungstag und Bekanntmachung des Hinweises auf die Patenterteilung: **22.08.2007**
(21) Anmeldenummer: 02749171.1
(22) Anmeldetag: 13.04.2002
(51) Int. Cl.: A01F 12/44

(54) **EINRICHTUNG ZUR VERSTELLUNG DER SIEBÖFFNUNGSWEITE AN MÄHDRESCHERN**
DEVICE FOR ADJUSTING THE WIDTH OF A SIEVE OPENING ON COMBINE HARVESTERS
DISPOSITIF SERVANT A AJUSTER LA LARGEUR D'OUVERTURE DU TAMIS DE MOISSONNEUSES-BATTEUSES

(30) Priorität: 27.04.2001 DE 10120957
(43) Veröffentlichungstag der Anmeldung: 21.04.2004
(73) Patentinhaber: CNH Belgium N.V., B-8210 Zedelgem (BE)
(72) Erfinder: JONCKHEERE, Marc, Rene, Monique, B-8490 Snellegem (BE); DHONT, Andre Georges, Jozef, B-9990 Maldegem (BE); BOSSUYT, Johnny, B-8820 Torhout (BE)
(74) Vertreter: Feldkamp, Rainer
(86) Internationale Anmeldenummer: PCT/IB2002/002907
(87) Internationale Veröffentlichungsnummer: WO 2002/087314

(56) Entgegenhaltungen:
- EP-A- 0 629 340
- EP-A- 0 678 238
- EP-A- 1 068 793
- EP-A- 1 166 617
- WO-A-99/62325
- FR-A- 2 066 154
- US-A- 4 770 190

## Beschreibung

Die Erfindung betrifft eine Einrichtung zur Verstellung der Sieböffnungsweite an Mähdreschern mit den Merkmalen nach dem Oberbegriff des Patentanspruchs 1.

In der Reinigungseinrichtung eines Mähdreschers sind mehrere Schwingbewegungen ausführende Siebe angeordnet, die zu ihrer Unterscheidung entsprechend ihrer räumlichen Anordnung als Vorsieb, Obersieb und Untersieb bezeichnet werden. Im betriebsgemäßen Einsatz des Mähdreschers ist es für eine optimale Reinigung des Dreschgutes notwendig, die Sieböffnungsweite an die zu reinigende Dreschgutmenge, an die jeweilige Dreschgutart und an deren augenblicklichen Feuchtigkeitsgrad anzupassen. Generell gilt, daß die Sieböffnungsweite mit der Zunahme der Korngröße und steigender Feuchtigkeit größer gewählt werden muß. Derartige Einrichtungen zur Verstellung der Sieböffnungsweite sind bereits in einer Vielzahl von Ausführungsvarianten bekannt geworden.

Eine der am häufigsten anzutreffenden Ausführungsvariante ist in der Bedienungsanleitung der Firma NEW HOLLAND mit dem Druckvermerk ,print No. 84017041, 02/99" gezeigt, die einen von Hand zu betätigenden Einstellhebel aufweist, der in einer annähernd horizontalen Ebene verschwenkbar und in einem vorbestimmten Schwenkbereich in mehreren Zwischenstellungen arretierbar ist. Diese Schwenkbewegung wird über ein Verbindungsstange auf die Verstellschiene der Lamellen übertragen, so daß sich diese gemeinsam mit ihren unter anderem als Lagerstellen dienenden Lamellendrähten verdrehen. Die Folge davon ist ein Aufrichten oder ein Absenken der Lamellen, wodurch sich die Sieböffnungsweite vergrößert bzw. verkleinert. Diese Einrichtungen sind in Durchflußrichtung des Dreschgutes gesehen am hinteren Ende des Siebrahmens angebracht, wobei das aus einem Stück bestehende Vorsieb mit einer Einrichtung zur Verstellung der Sieböffnungsweite ausgestattet ist, die von Hand über eine Öffnung in der rechten Seitenwand des Mähdreschers erreichbar ist. Das Obersieb und das Untersieb bestehen aus zwei nebeneinander angeordneten Siebabschnitten, die beide eine eigene derartige Einrichtung besitzen, die ebenfalls am hinteren Ende des Siebrahmens befestigt und durch Herantreten von hinten an den Mähdrescher in Griffhöhe des Bedieners zu betätigen sind.

Ein Nachteil der so aufgebauten und wie beschrieben angeordneten Einrichtungen zur Verstellung der Sieböffnungsweite ist, daß sich dadurch die Herstellungskosten für den Mähdrescher erhöhen, weil jedes Sieb bzw. sogar jeder Siebabschnitt mit einer separaten Einrichtung ausgerüstet ist. Weiterhin ist daran zu bemängeln, daß nach der Entnahme eines Siebes zum Zwecke der Säuberung oder bei einem Siebaustausch nach dem Einbau des gereinigten oder ausgetauschten Siebes die vorherige Größe der Sieböffnungsweite erst wieder neu eingestellt werden muß, was mit einem erhöhten Zeitaufwand verbunden ist. Bei der Verwendung dieser Einrichtung an einem Vorsieb kommt noch erschwerend hinzu, daß einmal die Zugängigkeit schlecht ist und zum anderen dadurch die eingestellte Sieböffnungsweite nicht genau überprüft werden kann.

Eine weitere Ausführungsvariante einer Einrichtung zur Einstellung der Sieböffnungsweite ist mit der DE-OS 1 952 808 bekannt geworden. Diese ist an einem Sieb angebracht, das von einem Siebrahmen umgeben ist, der in seiner Breite mittels Längsrippen in drei gleiche Siebabschnitte unterteilt ist. In jedem Siebabschnitt befindet sich die gleiche Anzahl von Lamellen, deren horizontal ausgerichtete Lamellendrähte im linken und im rechten Seitenträger des Siebrahmens sowie in den Längsrippen drehbar gelagert sind. Zum Verstellen der Sieböffnungsweite der Lamellen weist jeder Lamellendraht eine Abkröpfung auf, die pro Siebabschnitt in einer gemeinsamen längsverlaufenden Verstellschiene lagern. Um alle Lamellen gleichzeitig verstellen zu können, ist im hinteren Querträger des Siebrahmens eine rohrförmige und sich über die gesamte Breite des Siebes erstreckende Querwelle drehbar gelagert, die im Mittenbereich jedes Siebabschnitts nach unten gerichtete flache Ansätze aufweist. An jedem dieser Ansätze greift einenends gelenkig eine Verbindungsstange an, die anderenends in den längsverlaufenden Verstellschienen eingehängt sind. Zum Betätigen weist die Querwelle an einer Seite einen formschlüssigen Einsatz in Form einer Vierkantbohrung auf, in die eine mit einem Verstellhebel fest verbundene Welle mit der Form eines Vierkants eingesteckt ist. Dieser Verstellhebel wirkt mit einem am Siebkasten befestigten Sperrsegment zusammen, das im Kreisbogen um die Längsachse der Querwelle verläuft und mit mehreren Rastbohrungen ausgestattet ist, in die ein am Verstellhebel befestigter Sperrbolzen wahlweise eingreifen kann.

Auch an dieser Einrichtung zur Verstellung der Sieböffnungsweite ist von Nachteil, daß sie einen Kosten erhöhenden Faktor darstellt, weil jedes Sieb mit einer separaten Einrichtung ausgestattet ist. Ebenso ist die fehlende Möglichkeit der Reproduzierbarkeit einer vorher eingestellten Größe der Sieböffnungsweite nach einer Säuberung oder bei einem Siebwechsel zu bemängeln. Schließlich ist eine derartige Einrichtung für den Einsatz an einem sogenannten Vorsieb wegen schlechter Zugängigkeit und der eingeschränkten Möglichkeit zur Kontrolle der eingestellten Sieböffnungsweite nicht zu empfehlen.

Aus der EP-A-1166617 ist eine Reinigungsvorrichtung der im Oberbegriff des Anspruchs 1 genannten Art bekannt, bei dem auf der Unterseite der Verstellschiene eine Zahnstange angeordnet ist, die mit einem auf der Querwelle befestigten Zahnrad in Eingriff steht. Hierbei kann bei einem Wechsel oder Austausch des Siebes eine vorhergehende Einstellung der Sieböffnungsweite nicht mehr ohne weiteres erreicht werden. Zu diesem Zweck sind Markierungen an dem Zahnrad und der Verstellschiene vorgesehen. Derartige Markierungen können jedoch schwierig zu erkennen sein und eignen sich insbesondere nicht bei einer ferngesteuerten Verstelleinrichtung.

Deshalb liegt der Erfindung die Aufgabe zugrunde, eine Einrichtung zur Verstellung der Sieböffnungsweite an Mähdreschern zu schaffen, die kostengünstg herstellbar ist, bei der nach der Entnahme der Siebe zum Zwecke der Säuberung oder auch zum Siebwechsel der erneute Einbau der Siebes ohne großen Zeitaufwand mit der gleichen Größe der Sieböffnungsweite wie vorher möglich ist und die selbst im Falle des Einsatzes an einem Vorsieb gut zugänglich ist.

Diese Aufgabe wird gemäß der Erfindung mit den Merkmalen des Patentanspruchs 1 gelöst, wobei in den Unteransprüchen Merkmale aufgeführt sind, die diese Lösung in vorteilhafeter Weise weiterentwickeln.

Durch die lagefixierte Anordnung der Querwelle und ihres Verstellmechanismus am Siebkasten ist das Sieb selbst frei von derartigen Bauteilen, so daß für den Einsatz mehrerer Siebe die Einrichtung zur Verstellung der Öffnungsweite der Siebe nur einmal vorhanden sein muß. Die Lage der Querwelle unter dem Sieb in Verbindung mit ihrem aufwärts ausgerichteten Mitnehmer, der mit der Verstellschiene des Siebes über einen nur durch eine Aufwärtsbewegung des Siebes zu lösenden Formschluß in Verbindung steht, ist die Voraussetzung dafür, daß einmal die Funktion der Verschiebebewegung der Verstellschiene in annähernd horizontaler Richtung gesichert ist und zum anderen das Sieb selbst in kurzer Zeit durch eine Aufwärtsbewegung aus dieser Verbindung entnommen und auch ein anderes oder das gleiche Sieb nach einer Säuberung an diese Stelle wieder eingesetzt werden kann.

Die Einrichtung zur Verstellung der Sieböffnungsweite kann nach den Merkmalen des Unteranspruchs 2 in zweckmäßiger Weise an allen Sieben eines Mähdreschers eingesetzt werden, ganz gleich ob es sich um ein Vorsieb, ein Obersieb oder ein Untersieb handelt.

In einer bevorzugten Ausgestaltung nach den Merkmalen des Unteranspruchs 3 hat es sich bewährt, die Querwelle einenends im Bereich der Längsmittelebene des Siebkastens zu lagern und dort auch den Mitnehmer anzubringen, weil damit auch sehr breite Lamellen bzw. Siebe durch den mittigen Zug an den Lamellendrähten ohne einseitige Mehrbelastung problemlos in der Sieböffnungsweite verstellt werden können. Durch die Lage der zweiten Lagerstelle der Querwelle im Bereich eines Längsholmes liegt der gesamte Verstellmechanismus einerseits in einem geschützten Bereich und andererseits beeinträchtigt er an dieser Stelle auch nicht die Reinigungsfunktion der Siebe. Für die mechanische konstruktive Ausgestaltung des Verstellmechanismus nach den Merkmalen des Unteranspruchs 4 als Schwenkhebel, Verbindungsstange und Einstellhebel spricht dessen einfacher Aufbau.

Dieser Verstellmechanismus bietet sich nach den Merkmalen des Unteranspruchs 5 besonders für einen Einsatz an einem Vorsieb an, weil dann der Einstellhebel lediglich durch die Verwendung einer langen Verbindungsstange ebenfalls am hinteren Ende des Siebkastens angeordnet werden kann. Bezüglich der Ausgestaltung des Verstellmechanismus wird an dieser Stelle vorsorglich darauf hingewiesen, daß auch der Einsatz anderer Verstellmechanismen im Schutzbereich dieser Erfindung liegt. Das könnten beispielsweise elektrische oder hydraulische Antriebe sein, die die Querwelle direkt oder indirekt antreiben.

Nach den Merkmalen des Unteranspruchs 6 hat es sich als zweckmäßig erwiesen, die Querwelle in Durchflußrichtung des zu reinigenden Dreschgutes gesehen möglichst unter dem hinteren Ende des betreffenden Siebes anzuordnen, um den Verstellmechanismus sehr kurz zu halten.

Die Anbringung des Mitnehmers auf der Querwelle in unmittelbarer Nähe neben dem Lagerblech nach den Merkmalen des Unteranspruchs 7 belastet die Querwelle am wenigsten auf Biegung, so daß diese in dieser bevorzugten Ausführungsvariante im Durchmesser relativ klein gehalten werden kann. Außerdem bietet dann das Lagerblech dem Mitnehmer einen Schutz gegen mechanische Beschädigung. Der nur durch eine Aufwärtsbewegung des Siebes zu lösende Formschluß zwischen der Querwelle und der Verstellschiene des Siebes ist hier in bewährter Weise so gelöst, indem das aufwärts zeigende Ende des an der Querwelle befestigten Mitnehmers in eine nach unten offene Ausnehmung der Verstellschiene eingreift.

Eine empfohlene Möglichkeit zur lösbaren Befestigung des Siebes im Siebkasten besteht nach den Merkmalen im Unteranspruch 9 darin, den vorderen Querträger des Siebrahmens einfach mit zwei Stahlfedern fest zu klemmen und den hinteren Querträger mit zwei Schrauben am Boden des Siebkastens anzuschrauben. Zusätzlich nach den Merkmalen des Unteranspruchs 8 steht das als Rechteck ausgebildete Oberteil des Lagerbleches mit einer formgleichen Ausklinkung in der Längsrippe des Siebes in Verbindung, wodurch das Sieb weitere Sicherheit für einen sicheren Halt im Siebkasten bekommt.

Zur Vermeidung von Doppelpassungen und Verklemmungen in den Verbindungen zwischen dem Mitnehmer an der Querwelle und der Verstellschiene des Siebes einerseits und dem Lagerblech am Siebkasten und der Längsrippe im Sieb andererseits ist es nach den Merkmalen im Unteranspruch 10 zweckmäßig, zwischen dem oberen Ende des Mitnehmers und dem Grund der nach unten offenen Ausnehmung in der Verstellschiene im eingebauten Zustand des Siebes einen Spalt vorzusehen. Ebenso ist zwischen der Oberkante im Oberteil des Lagerbleches und dem Grund der nach unten offenen Ausklinkung in der Längsrippe ein Spalt zu lassen.

Damit nach der Entnahme eines Siebes zum Zwecke der Säuberung oder bei einem Siebwechsel der erneute Einbau eines anderen Siebes mit der gleichen Sieböffnungsweite wie vorher möglich ist, ist nach den Merkmalen des Unteranspruchs 11 an der Längsrippe des Siebes ein einfacher Handhebel zur Betätigung der Verstellschiene befestigt. In dem Fall wird der vordere Querträger einfach unter die Stahlfedern geschoben und durch ein Absenken des Siebes die Ausnehmung der Verstellschiene von oben auf den Mitnehmer gedrückt. Wenn dort keine Übereinstimmung vorhanden sein sollte, kann diese durch Betätigen des Handhebels hergestellt werden. Da die Stellung des Einstellhebels am Verstellmechanismus dabei nicht verändert wurde, ist die gleiche Sieböffnungsweite wie vorher erreicht. Dann wird der hintere Querträger des Siebrahmens mit zwei Schrauben am Siebkasten angeschraubt. Schließlich ist noch auf eine vorteilhafte konstruktive Ausbildung des Stellhebels am Verstellmechanismus nach den Merkmalen des Unteranspruchs 12 hinzuweisen, an dem ein unter der Einwirkung einer Feder stehender Rasthebel für die Fixierung der gewählten Sieböffnungsweite der Lamellen angebracht ist. Dazu ist der Rasthebel mit einer Raste ausgestattet, die in Rastnuten einer drehbar und lagefixierbar am Siebkasten befestigten Platte eingreift. Diese Platte wird so weit vor ihrer Befestigung am Siebkasten verdreht, bis beim Sitz der Raste des Rasthebels in deren am weitesten oben angeordneten Rastnut die Lamellen der Siebe geschlossen sind.

Damit ergeben sich zusammengefaßt als Vorteile für diese Einrichtung zur Verstellung der Sieböffnungsweite an Mähdreschern, daß sie durch ihre Anordnung nur am Siebkasten kostengünstig in der Herstellung ist. Außerdem bietet sie die Möglichkeit, bei einem erneuten Einbau desselben Siebes oder eines anderen Siebes ohne großen Zeitaufwand die vorhergehende Sieböffnungsweite wieder einzustellen. Besonders hervorzuheben ist die gute Zugängigkeit zum Einstellhebel des Verstellmechanismus im Falle der Anwendung an einem Vorsieb, obwohl sich das tief im Inneren der Reinigungseinrichtung eines Mähdreschers befindet.

Die Erfindung soll nun anhand eines Ausführungsbeispieles näher erläutert werden, wobei die einzelnen Figuren zeigen:
- Fig. 1:: eine schematische Seitenansicht einer Dresch- und Reinigungseinrichtung in einem Mähdrescher
- Fig. 2:: eine vergrößerte und in der Länge gekürzte Seitenansicht der Siebe der Reinigungseinrichtung mit der Einrichtung zur Verstellung der Sieböffnungsweite an deren Vorsieb
- Fig. 3:: eine perspektivische Frontansicht auf das Vorsieb und deren Einrichtung zur Verstellung der Sieböffnungsweite
- Fig. 4:: einen vergrößerten Ausschnitt von der Verbindungsstelle zwischen dem Siebkasten und dem Vorsieb
- Fig. 5:: einen vergrößerten Ausschnitt vom Einstellhebel des Verstellmechanismus zur Verstellung der Sieböffnungsweite für das Vorsieb
- Fig. 6:: einen vergrößerten Ausschnitt der Halterung des vorderen Querträgers des Vorsiebes im Siebkasten.

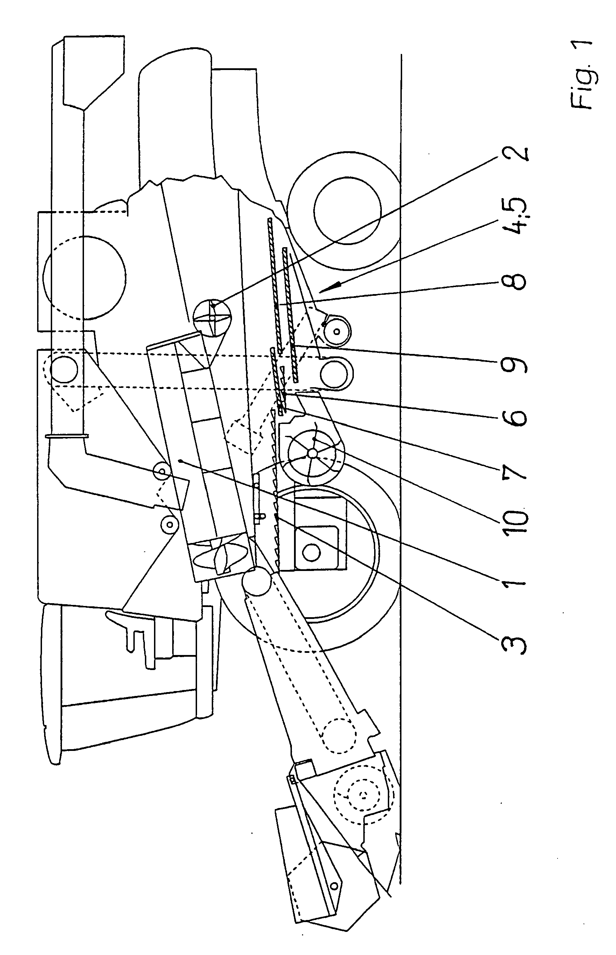

In Figur 1 ist eine schematische Seitenansicht eines Mähdreschers gezeigt, der mit einer Axial- Dresch- und Trenneinrichtung 1 ausgestattet ist, die das Dreschgut in seine Bestandteile Korn, Stroh und Spreu trennt. Das Stroh wird mit der an ihrem hinteren Ende angeordneten Auswurftrommel 2 als Schwad auf dem Feld abgelegt. Das von der Axial- Dresch- und Trenneinrichtung 1 abgeschiedene Gemisch von Korn und Spreu fällt einerseits direkt auf den Vorbereitungsboden 3 und andererseits teilweise auf den auf die Durchflußrichtung des zu reinigenden Dreschgutes bezogenen vorderen Teil der Siebe 4 der Reinigungseinrichtung 5, von dem aus es durch die Schwingbewegungen der Siebe 4 über die gesamte Reinigungseinrichtung 5 weiterbefördert wird. Der Vorbereitungsboden 3 dieses Mähdreschers hat noch eine zweite Stufe 6, die sich unter dem Vorsieb 7, vor dem Obersieb 8 und teilweise über dem Untersieb 9 der Reinigungseinrichtung 5 befindet.

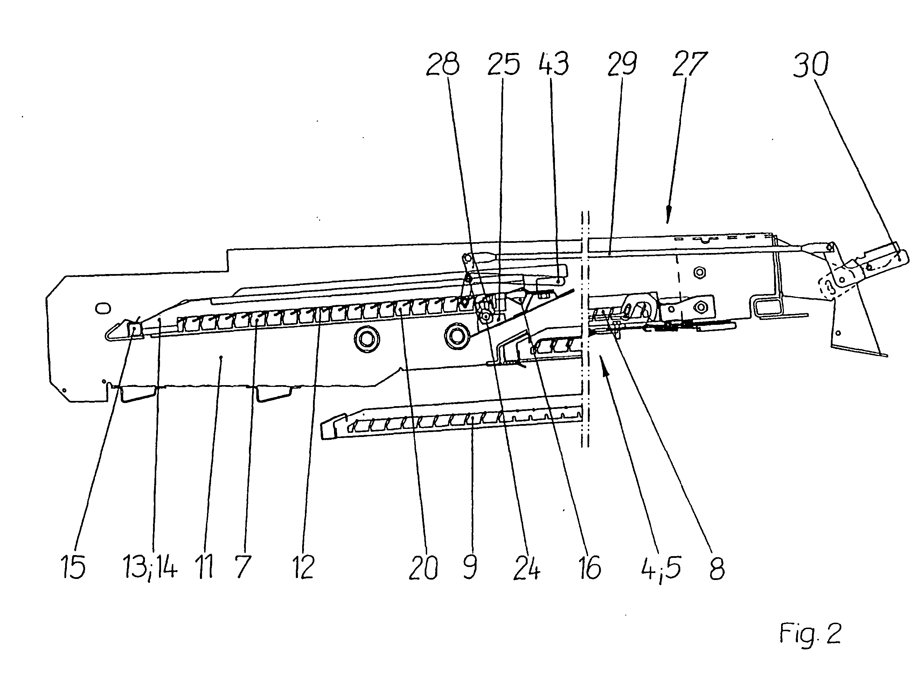

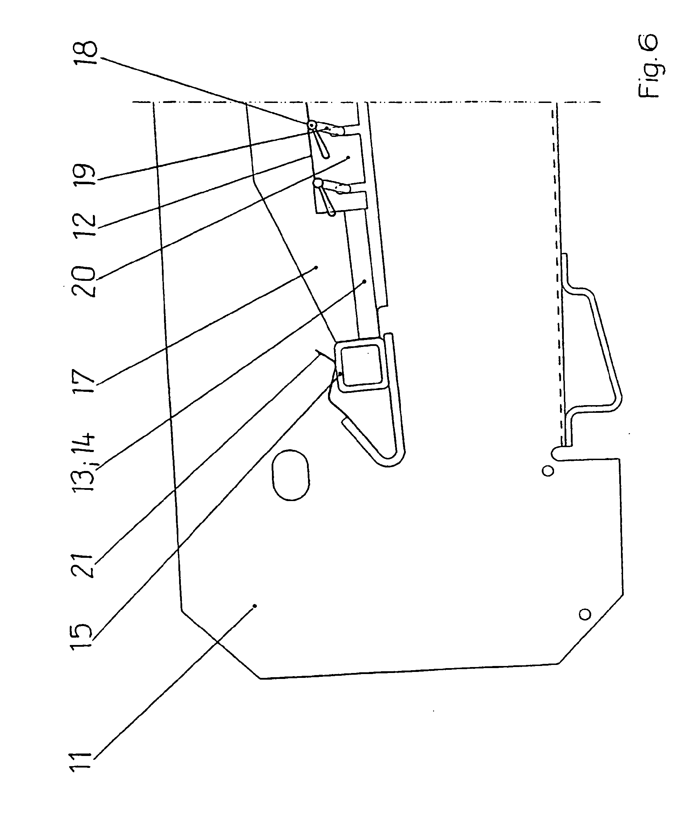

Zur Reinigungseinrichtung 5 gehört noch ein Gebläse 10, das die Siebe 4 und die zweite Stufe 6 des Vorbereitungsbodens 3 von unten mit einem Luftstrom beaufschlagt. Vorstehend erwähnte Schwingbewegungen führen das Vorsieb 7, die zweite Stufe 6 des Vorbereitungsbodens 3 und das Obersieb 8 gemeinsam aus, da sie zusammen in einem gemeinsamen schwingenden Siebkasten 11 untergebracht sind. Das Untersieb 9 führt mit einem separaten Siebkasten 11 dazu entgegengesetzt gerichtete Schwingbewegungen aus. Damit ein optimaler Reinigungsgrad der Reinigungseinrichtung 5 erreicht wird, kann einmal die Drehzahl des Gebläses 10 und zum anderen die Öffnungsweite der Lamellen 12 der Siebe 4 verändert werden. Wie letzteres nach der Erfindung gelöst ist, wird anhand der Figuren 2 bis 6 am Beispiel des Vorsiebes 7 näher erläutert.

Dieses Vorsieb 7 stimmt im Grundaufbau mit allen anderen Sieben 4 überein, weil es einen Siebrahmen 13 aufweist, der aus einem linken und einem rechten Seitenträger 14 sowie aus je einem sich zwischen diesen erstreckenden vorderen Querträger 15 und hinteren Querträger 16 besteht. Wenigstens in der Längsmittelebene des Siebkastens 11 bzw. auch des Vorsiebes 7 ist zwischen dem vorderen Querträger 15 und dem hinteren Querträger 16 eine Längsrippe 17 eingeschweißt, die das Vorsieb 7 in dem Fall in zwei Siebabschnitte unterteilt. Im linken und rechten Seitenträger 14 des Siebrahmens 13 und in der Längsrippe 17 sind die mit den Lamellen 12 des Vorsiebes 7 drehfest verbundenen Lamellendrähte 18 drehbar gelagert. Sie sind unmittelbar neben der Längsrippe 17 mit Abkröpfungen 19 ausgestattet, in die eine in Richtung der Längsrippe 17 verschiebebewegliche Verstellschiene 20 eingehängt ist. Das Vorsieb 7 ist im Siebkasten 11 leicht lösbar angebracht, indem sein vorderer Querträger 15 von wenigstens zwei Stahlfedern 21 eingeklemmt wird und sein hinterer Querträger 16 mit wenigstens zwei Schrauben 22 an dessen Boden 23 befestigt ist.

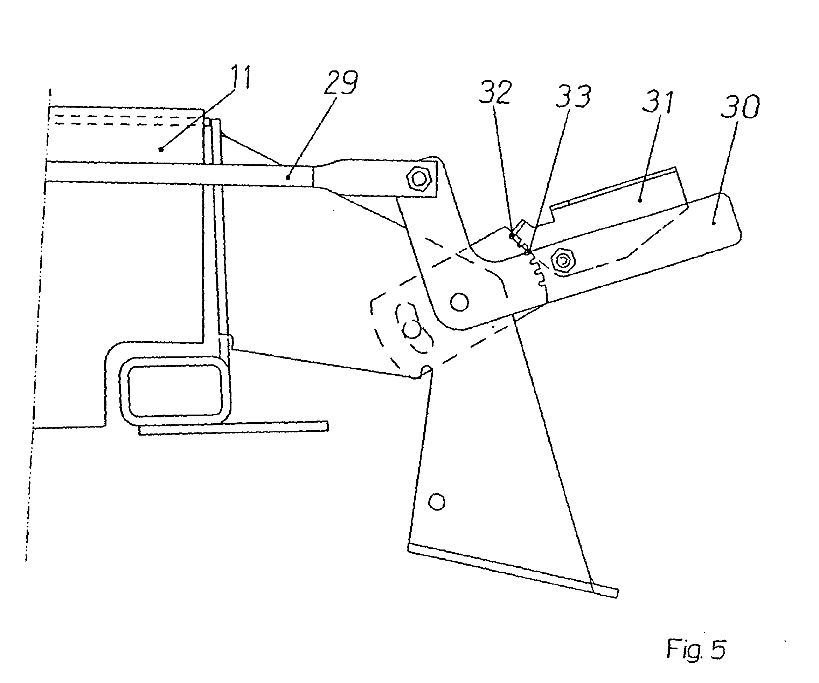

Zur Verstellung der Sieböffnungsweite der Lamellen 12 steht die Verstellschiene 20 mit einer direkt unter dem hinteren Ende des Vorsiebes 7 angeordneten Querwelle 24 in Verbindung, die einenends im Bereich der Längsmittelebene des Siebkastens 11 in einem am Boden 23 des Siebkastens 11 befestigten Lagerblech 25 und anderenends im Bereich des in Fahrtrichtung des Mähdreschers gesehenen rechten Längsholmes 26 des Siebkastens 11 drehbar gelagert ist. Ihr letztgenanntes außen liegendes Ende ist mit einem Verstellmechanismus 27 gekoppelt, der einmal aus einem mit der Querwelle 24 verbundenen und sich um deren Rotationsachse drehbaren Schwenkhebel 28 besteht, an den das eine Ende einer langen und sich in Richtung des Längsholmes 26 erstreckenden Verbindungsstange 29 gelenkig angeschlossen ist. Das letzte Teil des Verstellmechanismus 27 ist ein Einstellhebel 30 nach Figur 5, der mit dem hinteren Ende der Verbindungsstange 29 gelenkig verbunden ist. Er ist mit einem Rasthebel 31 versehen, dessen Raste 32 in Rastnuten 33 einer Platte eingreift, die drehbar und lagefixierbar am Siebkasten 11 angebracht ist. Mehrere Rastnuten 33 in der Platte dienen zur wahlweisen Einstellung von Zwischengrößen und Endstellungen der Sieböffnungsweite der Lamellen. Eine zwischen dem Rasthebel 31 und dem Drehpunkt des Einstellhebels 30 angeordnete Feder sorgt dafür, daß die Raste 32 sicher in der gewählten Rastnut 33 verharrt und damit die Position der Lamellen 12 bestehen bleibt.

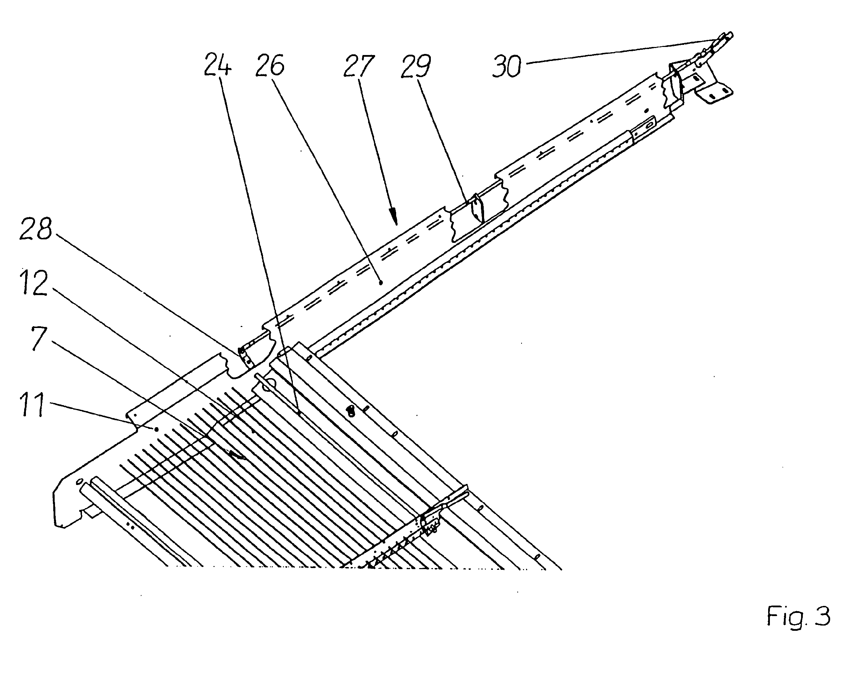

Die Querwelle 24 und ihr Verstellmechanismus 27 sind am besten in Figur 3 zu sehen, wobei der Einfachheit halber die Lamellen 12 des Obersiebes 8 in der zeichnerischen Darstellung weggelassen wurden.

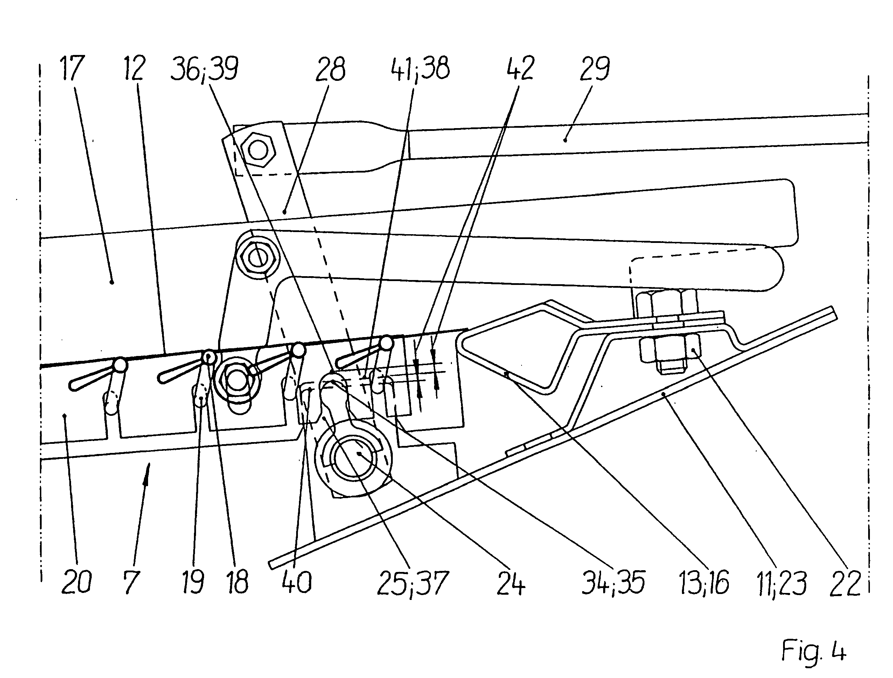

Die Verbindung zwischen der Querwelle 24 und der Verstellschiene 20 ist nach Figur 4 über einen aufwärts ausgerichteten und verdrehfest mit der Querwelle 24 verbundenen Mitnehmer 34 realisiert, der sich in unmittelbarer Nähe neben dem Lagerblech 25 befindet und mit seinem oberen Ende 35 in eine nach unten offene Ausnehmung 36 der Verstellschiene 20 des Vorsiebes 7 eingreift.

Schließlich gibt es zwischen dem Vorsieb 7 und dem Siebkasten 11 über das Lagerblech 25 noch eine formschlüssige Verbindung, weil dessen Oberteil 37 als Rechteck ausgebildet ist, das in eine nach unten offene Ausklinkung 38 in der Längsrippe 17 des Vorsiebes 7 in der Form eines Rechtecks eingreift.

Für beide vorstehend zitierten Verbindungen ist es bedeutsam, daß im eingebauten Zustand des Vorsiebes 7 zwischen dem oberen Ende 35 des Mitnehmers 34 und dem Grund 39 der nach unten offenen Ausnehmung 36 in der Verstellschiene 20 sowie auch zwischen der Oberkante 40 im Oberteil 37 des Lagerbleches 25 und dem Grund 41 der nach unten offenen Ausklinkung 38 in der Längsrippe 17 des Vorsiebes 7 ein Spalt 42 vorgesehen ist.

In den Figuren 2 bis 4 ist auf der Oberseite des Vorsiebes 7 ein Handhebel 43 zu sehen, der schwenkbeweglich an deren Längsrippe 17 befestigt und gelenkig mit der Verstellschiene 20 verbunden ist.

## Patentansprüche

1. Reinigungseinrichtung für Mähdrescher, die eine Einrichtung zur Verstellung der Sieböffungsweite für mindestens ein in einer Reinigungseinrichtung (5) angeordnetes Sieb (4) aufweist, wobei:
• das Sieb (4) lösbar im Siebkasten (11) der Reinigungseinrichtung (5) befestigt ist,
• die Lamellen (12) des Siebes (4) an verdrehbaren Lamellendrähten (18) angebracht sind, in deren Abkröpfungen (19) eine Verstellschiene (20) eingehängt ist,
• die Verstellschiene (20) über eine Querwelle (24) mit einem Verstellmechanismus (27) in Verbindung steht,
• die Querwelle (24) und ihr Verstellmechanismus (27) am Siebkasten (11) lagefixiert angeordnet sind,
• sich die Querwelle (24) unterhalb des Siebes (4) befindet, und an der Querwelle eine aufwärts ausgerichtete und verdrehfest mit ihr verbundene Mitnehmereinrichtung (34) befestigt ist.
• die Mitnehmereinrichtung (34) mit der Verstellschiene (20) über einen durch eine Aufwärtsbewegung des Siebes (4) zu lösenden Formschluß in Verbindung steht,
**dadurch gekennzeichnet, dass** die Mitnehmereinrichtung durch einen einzigen Mitnehmer (34) mit einem aufwärts zeigenden Ende gebildet ist, der mit seinem oberen Ende (35) in eine nach unten offene Ausnehmung (36) der Verstellschiene (20) des Siebes (4) eingreift.

2. Reinigungseinrichtung nach Anspruch 1, **dadurch gekennzeichnet, dass** sie zur Verstellung der Sieböffnungsweite eines Vorsiebes (7) und/oder eines Obersiebes (8) und/oder eines Untersiebes (9) der Reinigungseinrichtung (5) an deren Siebkästen (11) angeordnet ist.

3. Reinigungseinrichtung nach Anspruch 1 und/oder 2, **dadurch gekennzeichnet, dass** die Querwelle (24) mit dem an dieser Stelle angebrachten Mitnehmer (34) einenends im Bereich der Längsmittelebene des Siebkastens (11) in einem Lagerblech (25) und anderendends im Bereich eines Längsholmes (26) des Siebkastens (11) gelagert ist, wo sie mit dem Verstellmechanismus (27) gekoppelt ist.

4. Reinigungseinrichtung nach einem oder mehreren der vorherigen Ansprüche, **dadurch gekennzeichnet, dass** der Verstellmechanismus (27) aus einem mit der Querwelle (24) verbundenen und sich um deren Rotationsachse drehbaren Schwenkhebel (28) besteht, an den das eine Ende einer sich in Richtung des Längsholmes (26) erstreckenden Verbindungsstange (29) gelenkig angeschlossen ist und deren gegenüberliegendes Ende in gelenkiger Verbindung mit einem Einstellhebel (30) steht, der in Durchflußrichtung des zu reinigenden Dreschgutes gesehen am hinteren Ende des Siebkastens (11) angebracht ist.

5. Reinigungseinrichtung nach einem oder mehreren der vorherigen Ansprüche, **dadurch gekennzeichnet, dass** sich der Einstellhebel (30) zur Verstellung der Sieböffnungsweite eines Vorsiebes (7), das in Durchflußrichtung des zu reinigenden Dreschgutes gesehen vor einem Obersieb (8) angeordnet und mit diesem in einem gemeinsamen Siebkasten (11) untergebracht ist, am hinteren Ende des gemeinsamen Siebkastens (11) befindet.

6. Reinigungseinrichtung nach einem oder mehreren der vorherigen Ansprüche, **dadurch gekennzeichnet, dass** die Querwelle (24) in Durchflußrichtung des zu reinigenden Dreschgutes gesehen weit am hinteren Ende unter dem Sieb (4) angeordnet ist.

7. Reinigungseinrichtung nach einem oder mehreren der vorherigen Ansprüche, **dadurch gekennzeichnet, dass** sich der Mitnehmer (34) der Querwelle (24) im Bereich der Längsmittelebene des Siebkastens (11) in unmittelbarer Nähe neben dem Lagerblech (25) befindet.

8. Reinigungseinrichtung nach einem oder mehreren der vorherigen Ansprüche, **dadurch gekennzeichnet, dass** das Oberteil (37) des Lagerbleches (25) als Rechteck ausgebildet ist, das in eine nach unten offene Ausklinkung (38) in einer Längsrippe (17) des Siebes (4) eingreift.

9. Reinigungseinrichtung nach einem oder mehreren der vorherigen Ansprüche, **dadurch gekennzeichnet, dass** das Sieb (4) mit einem Siebrahmen (13) umgeben ist, dessen in Durchflußrichtung des zu reinigenden Dreschgutes gesehener vorderer Querträger (15) im Siebkasten (11) mit wenigstens zwei Stahlfedern (21) gehalten und dessen hinterer Querträger (16) mit wenigstens zwei Schrauben (22) am Siebkasten (11) befestigt ist.

10. Reinigungseinrichtung nach einem oder mehreren der vorherigen Ansprüchen 1 bis 9, **dadurch gekennzeichnet, dass** im eingebauten Zustand des Siebes (4) zwischen dem oberen Ende (35) des Mitnehmers (34) und dem Grund (39) der nach unten offenen Ausnehmung (36) in der Verstellschiene (20) sowie auch zwischen der Oberkante (40) im Oberteil (37) des Lagerbleches (25) und dem Grund (41) der nach unten offenen Ausklinkung (38) in der Längsrippe (17) des Siebes (4) ein Spalt (42) vorgesehen ist.

11. Reinigungseinrichtung nach einem oder mehreren der vorherigen Ansprüche, **dadurch gekennzeichnet, dass** an der Längsrippe (17) auf der Oberseite des Siebes (4) ein Handhebel (43) schwenkbeweglich befestigt ist, der gelenkig mit der Verstellschiene (20) verbunden ist.

12. Reinigungseinrichtung nach einem oder mehreren der vorherigen Ansprüche, **dadurch gekennzeichnet, dass** der Einstellhebel (30) mit einem Rasthebel (31) versehen ist, dessen Raste (32) mit den Rastnuten (33) einer drehbar und lagefixierbar am Siebkasten (11) befestigten Platte zur Einstellung der gewünschten Sieböffnungsweite in Verbindung steht, wobei die Position der Platte so eingestellt ist, dass beim Sitz der Raste (32) in der obersten Rastnut (33) die Lamellen (12) der Siebe (4) geschlossen sind.

## Claims

1. A cleaning device for combine harvesters providing a device for adjusting the width of the sieve mesh for at least one sieve arranged in a cleaning device (5), where:
◆ the sieve (4) is fixed in the sieve box (11) of the cleaning unit (5) so that it can be released,
◆ the louvres (12) of the sieve (4) are attached to twistable louvre wires (18), in the kinks (19) of which an adjusting rail (20) is suspended,
◆ the adjusting rail (20) is connected with an adjusting mechanism (27) via a transverse shaft (24),
◆ the transverse shaft (24) and its adjusting mechanism (27) are arranged at a fixed position on the sieve box (11),
◆ the transverse shaft (24) is located beneath the sieve (4), to which an upwards directed driver (34) is arranged such that it cannot twist,
◆ the driver (34) is connected with the adjusting rail (20) via an engagement which is released by an upwards movement of the sieve (4),
**characterised in that** the driver unit consists of a single driver (34) with an upward pointing end where the driver's upper end (35) engages in a downwards opening recess (36) in the adjusting rail (20) of the sieve (4).

2. A cleaning device according to claim 1, **characterised in that** it is arranged on their sieve boxes (11) for adjusting the width of the mesh of a preliminary sieve (7) and/or of an upper sieve (8) and/or of a lower sieve (9) of a cleaning unit (5).

3. A cleaning device according to claims 1 and/or 2, **characterised in that** the transverse shaft (24) with the driver (34) fixed at this place is carried at one end in the region of the longitudinal central plane of the sieve box (11) in a bearing plate (25) and at the other end in the region of a longitudinal spar (26) of the sieve box (11), where it is coupled with the adjusting mechanism (27).

4. A cleaning device according to any of the preceding claims, **characterised in that** the adjusting mechanism (27) consists of a pivoted lever (28) connected with the transverse shaft (24), which can turn about its axis of rotation, to which the end of a connecting rod (29) extending in the direction of the longitudinal spar (26) is flexibly joined and the opposite end of which has a flexible connection with the setting lever (30), which is fixed at the rear end, viewed in the direction of the flow of threshed material, of the sieve box (11).

5. A cleaning device according to any of the preceding claims, **characterised in that** the setting lever (30) for adjusting the width of the mesh of a preliminary sieve (7), which is arranged in front of, viewed in the direction of the threshed material to be cleaned, an upper sieve (8) in a common sieve box (11), is fixed at the rear end of the common sieve box (11).

6. A cleaning device according to any of the preceding claims, **characterised in that** the transverse shaft (24) is arranged far at the rear end beneath the sieve (4), viewed in the direction of flow of the threshed material to be cleaned.

7. A cleaning device according to any of the preceding claims, **characterised in that** the driver (34) of the transverse shaft (24) is located in the region of the longitudinal centre plane of the sieve box (11) in the immediate vicinity next to the bearing plate (25).

8. A cleaning device according to any of the preceding claims, **characterised in that** the upper part (37) of the bearing plate (25) is formed as a rectangle, which engages with a downwards opening notch (38) in a longitudinal rib (17) of the sieve (4).

9. A cleaning device according to any of the preceding claims, **characterised in that** the sieve (4) is surrounded with a sieve frame (13), the front transverse support (15) of which, viewed in the direction of travel of the threshed material to be cleaned, is held in the sieve box (11) with at least two steel springs (21) and the rear support of which is fixed to the sieve box (11) with at least two screws (22).

10. A cleaning device according to any of the preceding claims 1 to 9, **characterised in that** in the installed state of the sieve (4) between the upper end (35) of the driver (34) and the bottom (39) of the downwards-opening recess (36) in the adjusting rail (20) and also between the upper edge (40) in the upper part (37) of the bearing plate (25) and the bottom (41) of the downwards opening notch (38) in the longitudinal rib (17) of the sieve (4) a gap (42) is provided.

11. A cleaning device according to any of the preceding claims, **characterised in that** at the longitudinal rib (17) on the upper side of the sieve (4) a hand lever (43) is fixed so it can swing, which is flexibly joined to the adjusting rail (20).

12. A cleaning device according to any of the preceding claims, **characterised in that** the setting lever (30) is provided with a catch lever (31), the catch of which engages with the stop notches (33) of a rotatable plate attached to the sieve box (11) in a fixed position for setting the desired width of sieve mesh, through which the position of the plate is set in such a way that when the catch (32) is seated in the uppermost notch (33) the louvres (12) of the sieve (4) are closed.

## Revendications

1. Dispositif de nettoyage pour moissonneuses-batteuses qui présente un dispositif pour le réglage de la largeur des mailles pour au moins un crible (4) disposé dans un nettoyeur (5) dans lequel :
◆ le crible (4) est fixé dans la boîte de crible (11) du nettoyeur (5) de manière à pouvoir être libéré,
◆ les chicanes (12) du crible (4) sont fixées à des fils de chicanes (18) susceptibles de torsion, dans les bandes de pliage desquelles (19) un rail de réglage (20) est suspendu,
◆ le rail de réglage (20) est relié à un mécanisme de réglage (27) par le biais d'un arbre transversal (24),
◆ l'arbre transversal (24) et son mécanisme de réglage (27) sont agencés dans une position fixe sur la boîte de crible (11),
◆ l'arbre transversal (24) est situé en dessous du crible (4) sur lequel un entraîneur (34) dirigé vers le haut est agencé de manière à ne pas pouvoir subir de torsions,
◆ l'entraîneur (34) est relié au rail de réglage (20) par un engrènement qui est libéré par un mouvement vers le haut du crible (4),
**caractérisé en ce que** le dispositif entraîneur est formé par un seul entraîneur (34) avec une extrémité dirigée vers le haut qui s'engrène, par son extrémité supérieure (35), dans une gorge d'ouverture vers le bas (36) du rail de réglage (20) du crible (4).

2. Dispositif de nettoyage pour moissonneuses-batteuses selon la revendication 1, **caractérisé en ce que** il est agencé sur leurs boîtes de crible (11) pour le réglage de la largeur des mailles d'un crible préliminaire (7) et/ou d'un crible supérieur (8) et/ou d'un crible inférieur (9) d'un nettoyeur (5).

3. Dispositif de nettoyage pour moissonneuses-batteuses selon la revendication 1 et/ou 2, **caractérisé en ce que** l'arbre transversal (24) avec l'entraîneur (34) fixé à cet endroit est supporté à une extrémité au voisinage du plan central longitudinal de la boîte de crible (11) dans une plaque d'appui (25) et, à l'autre extrémité, au voisinage d'un longeron longitudinal (26) de la boîte de crible (11), où il est associé au mécanisme de réglage (27).

4. Dispositif de nettoyage pour moissonneuses-batteuses selon l'une quelconque des revendication précédentes, **caractérisé en ce que** le mécanisme de réglage (27) est constitué d'un levier pivoté (28) relié à l'arbre transversal (24) qui peut tourner autour de son axe de rotation auquel l'extrémité d'une tige de liaison (29) s'étendant en direction du longeron longitudinal (26) est reliée de manière flexible et dont l'extrémité opposée possède une liaison flexible avec le levier de réglage (30) qui est fixée à l'extrémité arrière, vue dans le sens de l'écoulement du produit battu, de la boîte de crible (11).

5. Dispositif de nettoyage pour moissonneuses-batteuses selon l'une quelconque des revendication précédentes, **caractérisé en ce que** le levier de réglage pour le réglage de la largeur des mailles d'un crible préliminaire (30), qui est disposé devant, vu dans le sens du produit battu à nettoyer (7), un crible supérieur (8) dans une boîte de crible commune (11) est fixé à l'extrémité arrière de la boîte de crible commune (11).

6. Dispositif de nettoyage pour moissonneuses-batteuses selon l'une quelconque des revendications précédentes, **caractérisé en ce que** l'arbre transversal (24) est disposé loin à l'extrémité arrière en dessous du crible (4), vu dans le sens de l'écoulement du produit battu à nettoyer.

7. Dispositif de nettoyage pour moissonneuses-batteuses selon l'une quelconque des revendications précédentes, **caractérisé en ce que** l'entraîneur (34) de l'arbre transversal (24) est situé dans la région du plan central longitudinal de la boîte de crible (11) au voisinage immédiat de la plaque d'appui (25).

8. Dispositif de nettoyage pour moissonneuses-batteuses selon l'une quelconque des revendications précédentes, **caractérisé en ce que** la partie supérieure (37) de la plaque d'appui (25) a la forme d'un rectangle qui s'engrène avec la gorge d'ouverture vers le bas (38) dans une nervure longitudinale (17) du crible (4).

9. Dispositif de nettoyage pour moissonneuses-batteuses selon l'une quelconque des revendications précédentes, **caractérisé en ce que** le crible (4) est entouré d'un cadre de crible (13) dont le support transversal avant (15), vu dans le sens du déplacement du produit battu à nettoyer, est maintenu dans la boîte de crible (11) par au moins deux ressorts en acier (21) et dont le support arrière est fixé à la boîte de crible (11) à l'aide d'au moins deux vis (22).

10. Dispositif de nettoyage pour moissonneuses-batteuses selon l'une quelconque des revendications précédentes, **caractérisé en ce que** à l'état monté du crible (4) un interstice (42) est prévu entre l'extrémité supérieure (35) de l'entraîneur (34) et le fond (39) de la gorge d'ouverture vers le bas (36) dans le rail de réglage (20) ainsi qu'entre le bord supérieur (40) dans la partie supérieure (37) de la plaque d'appui (25) et le fond (41) de l'encoche d'ouverture vers le bas (38) dans la nervure longitudinale (17) du crible (4).

11. Dispositif de nettoyage pour moissonneuses-batteuses selon l'une quelconque des revendications précédentes, **caractérisé en ce qu'**au niveau de la nervure longitudinale (17) sur la face supérieure du crible (4), un levier à main (43) est fixé de manière à pouvoir osciller, lequel est réuni de manière flexible au rail de réglage (20).

12. Dispositif de nettoyage pour moissonneuses-batteuses selon l'une quelconque des revendicatiosn précédentes, **caractérisé en ce que** le levier de réglage (30) est doté d'un levier d'arrêt (31) dont l'arrêt s'engrène avec les encoches d'arrêt (33) d'une plaque pivotable fixée à la boîte de crible (11) dans une position fixe pour le réglage de la largeur désirée des mailles du crible grâce à quoi la position de la plaque est réglée de manière à ce que lorsque l'arrêt (32) est placé dans l'encoche la plus haute (33), les chicanes (12) du crible (4) sont fermées.
